# FASCICULE DE BREVET EUROPEEN

(11) **EP 0 456 535 B1**
(45) Date de publication et mention de la délivrance du brevet: **09.06.1993**
(21) Numéro de dépôt: 91400965.9
(22) Date de dépôt: 10.04.1991
(51) Int. Cl.: F02M 31/12

(54) **Dispositif d'admission pour un moteur à combustion interne à gaz prémélangé**
Einlassvorrichtung für einen Gemisch-einführenden Verbrennungsmotor
Intake device for a mixture inducing internal combustion engine

(30) Priorité: 10.05.1990 FR 9005821
(43) Date de publication de la demande: 13.11.1991
(73) Titulaire: AUTOMOBILES PEUGEOT, 75116 Paris (FR); AUTOMOBILES CITROEN, 92200 Neuilly-sur-Seine (FR)
(72) Inventeur: Laine, Gabriel, F-78570 Andresy (FR)
(74) Mandataire: Durand, Yves Armand Louis

(56) Documents cités:
- EP-A- 0 267 645
- EP-A- 0 343 652
- DE-A- 3 228 930
- DE-A- 3 509 816
- FR-A- 1 076 494
- FR-A- 2 567 965
- US-A- 4 378 001

## Description

La présente invention concerne un dispositif d'admission pour un moteur à combustion interne à gaz prémélangé comprenant un injecteur de carburant disposé dans la tubulure d'admission en aval du papillon d'admission et un élément chauffant disposé en aval de l'injecteur dans le conduit d'admission se raccordant à la tubulure d'admission pour réchauffer le mélange air-carburant avant son entrée dans le cylindre du moteur.

On connnaît par EP-A-0 343 652 un dispositif d'admission du genre ci-dessus où l'élément chauffant est un corps annulaire chauffé électriquement et traversé par le mélange d'air et de carburant.

Cependant, de tels éléments de chauffage ne sont utiles que lors du démarrage à froid du moteur et de la mise en température du moteur de sorte qu'en dehors de cette période, ces éléments ne fonctionnent pas et occasionnent des pertes de charge dégradant les performances du fonctionnement du moteur.

US-A-4 378 001 décrit également un dispositif d'admission pour un moteur à combustion interne agencé pour supprimer les pertes de charge dûes à l'élément chauffant en encastrant ce dernier dans la paroi de la culasse.

Cependant, l'élément chauffant est constitué par un oscillateur haute fréquence ou élément PTC consommant toujours du courant même lorsque la température autour de l'élément PTC est élevée parce que la période de démarrage à froid du moteur est achevée.

DE-A-32 28 930 décrit un carburateur du type à injection de carburant comprenant un élément chauffant encastré dans la paroi de la tuyauterie d'admission reliée à la culasse du moteur à combustion interne et communiquant la chaleur au mélange produit par le carburateur. Cependant, afin d'augmenter l'efficacité de l'élément chauffant, il est prévu un tube muni d'ouvertures et qui est rétractable dans la tuyauterie d'admission reliée à la culasse définissant le conduit d'admission, en particulier quand la période de démarrage à froid du moteur est achevée. Ce tube, ayant pour objet de pouvoir augmenter à volonté le volume du mélange en contact avec l'élément chauffant, occasionne des pertes de charge encore relativement importantes.

La présente invention a pour but de pallier les inconvénients ci-dessus en proposant un dispositif d'admission caractérisé en ce que l'élément chauffant est escamotable dans la partie de culasse définissant le conduit d'admission lorsque la période de démarrage à froid du moteur est achevée.

Selon une caractéristique de l'invention, l'élément chauffant est porté par un organe thermiquement isolant commandé pouvant occuper une position active de présence de l'élément chauffant dans le conduit d'admission et une position inactive d'escamotage de l'élément chauffant dans la partie de la culasse précitée.

Avantageusement, l'organe précité est un doigt monté coulissant dans la partie de la culasse précitée et prolongé à son extrémité opposée à celle portant l'élément chauffant par une tige logée dans un boîtier extérieur fixé à la culasse et solidaire d'une membrane souple séparant le boîtier en deux chambres interne et externe, la chambre externe communiquant avec la tubulure d'admission en amont du papillon d'admission par l'intermédiaire d'une vanne de coupure temporisée de façon que la pression d'air règnant dans la chambre externe après une période prédéterminée de démarrage du moteur exerce sur la membrane une aspiration amenant le doigt à la position inactive précitée.

Selon une autre caractéristique de l'invention, un ressort est disposé dans la chambre externe en étant en appui sur la membrane et sur la face extrême opposée du boîtier et taré de façon à permettre le maintien du doigt à la position active ou inactive suivant la pression d'air règnant dans la chambre externe.

Le dispositif comprend de plus un contacteur électrique actionné par l'extrémité libre de la tige précitée lorsque le doigt est en position inactive de façon à couper le circuit d'alimentation électrique de l'élément chauffant.

La tige précitée est en un matériau électriquement conducteur et traverse le doigt pour contacter l'élément chauffant qui est relié au potentiel positif d'une source d'alimentation par l'intermédiaire de la tige, d'un conducteur spiralé situé dans la chambre intérieure et d'un fil conducteur relié électriquement au ressort et à une borne d'alimentation solidaire du boîtier et au potentiel de masse par le contacteur électrique.

Selon un mode de réalisation, l'élément chauffant présente en section transversale une forme circulaire à partie concave tournée vers l'injecteur.

Selon un autre mode de réalisation, où l'élément chauffant est disposé à l'endroit où le conduit d'admission se sépare pour alimenter deux soupapes d'admission du moteur à au moins trois soupapes par cylindre, l'élément chauffant présente en section transversale une forme triangulaire dont le plan bissecteur vertical contient l'axe de l'injecteur et la pointe fait face à l'injecteur.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant deux modes de réalisation de l'invention, et dans lesquels.

La figure 1 est une vue en coupe verticale du dispositif d'alimentation conforme à l'invention où l'élément chauffant est présent dans le conduit d'admission.

La figure 2 est une vue identique à celle de la figure 1 avec cependant l'élément chauffant escamoté.

La figure 3 est une vue en coupe suivant la ligne III-III de la figure 1.

La figure 4 est une vue en section transversale de l'élément chauffant suivant un autre mode de réalisation.

La figure 5 est une vue schématique de dessus du dispositif d'alimentation où l'élément chauffant est réalisé suivant un autre mode de réalisation.

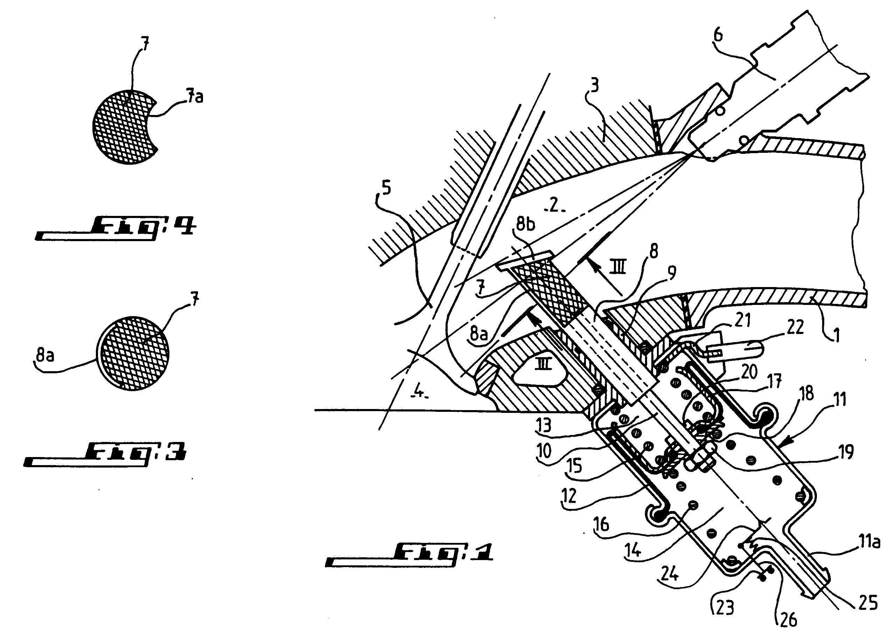

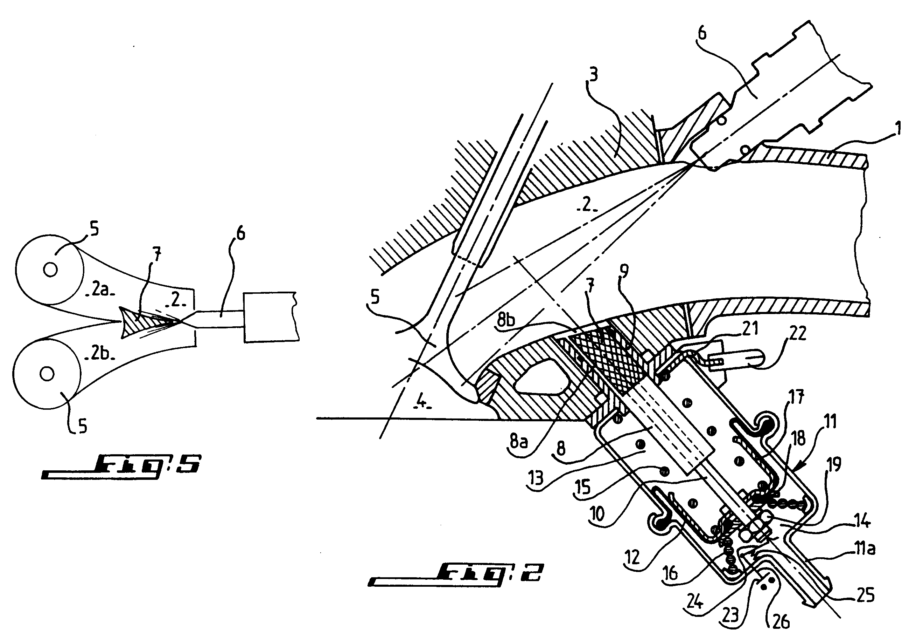

En se reportant aux figures 1 à 3, le dispositif d'admission comprend une tubulure d'admission 1 raccordée de façon étanche à un conduit d'admission 2 disposé dans la culasse 3 d'un moteur à combustion interne non représenté en détail, lequel conduit 2 débouche dans un cylindre 4 du moteur via une soupape d'admission 5 partiellement représentée. La tubulure d'admission 1 porte un injecteur 6 situé en aval d'un papillon d'admission (non représenté) et incliné relativement au sens d'écoulement de l'air de combustion. L'injecteur 6 a sa buse d'injection faisant saillie dans la tubulure 1 au voisinage de l'entrée du conduit d'admission 2 et pulvérise en quantité dosée du carburant dans l'air de combustion. Pour l'obtention d'une bonne composition du mélange d'air de combustion et de carburant lors des périodes de démarrage à froid et de mise en température du moteur, des éléments chauffants 7 chauffés électriquement sont disposés respectivement dans les conduits d'admission 2 débouchant dans les cylindres du moteur.

Selon l'invention, chaque élément 7 peut être escamoté dans la partie inférieure de la culasse 3 définissant le conduit d'admission 2 lorsque la période de démarrage à froid et de mise à température du moteur est achevée.

A cet effet, l'élément chauffant 7 est porté, au voisinage de son extrémité, par un doigt cylindrique 8 axialement coulissant dans un alésage de la culasse 3 défini par une douille 9 solidaire de la culasse 3 par une bride de fixation. Le doigt 8 est en un matériau thermiquement isolant et a sa partie d'extrémité 8a formant une plaque présentant en section transversale une forme en secteur auquel est solidarisé l'élément chauffant cylindrique 7 de façon que la partie 8a et l'élément chauffant 7 assure la continuité cylindrique du doigt 8. Ce dernier se termine par une partie de paroi 8b qui, en position escamotée de l'élément 7, assure la continuité de la paroi inférieure du conduit d'admission 2. La partie en secteur 8a est bien entendu située à l'opposé de la partie de l'élément chauffant 7 faisant face à l'injecteur 6.

Le doigt 8 est prolongé à l'opposé de sa partie d'extrémité 8a portant l'élément 7 par une tige 10 en un matériau électriquement conducteur logé dans un boîtier externe 11 solidaire de la culasse 3 coaxialement à l'axe longitudinal commun à l'élément 7, au doigt 8 et à la tige 10. Une membrane souple 12 solidaire du boîtier 11 partage ce dernier en deux chambres interne 13 et externe 14 et est mécaniquement reliée à l'extrémité de la tige 10. Un conducteur électrique formé d'un fil spiralé 15 est situé dans la chambre interne 13, l'une de ses spires extrêmes est en appui sur la paroi extrême correspondante du boîtier 11 et son autre spire opposée est en appui sur une coupelle métallique 17 solidaire de la membrane 12. Le ressort 16, logé dans la chambre externe 14, est en appui par l'une de ses spires extrêmes sur la paroi extrême du boîtier 11 opposée à celle servant d'appui au ressort 15 et sa spire extrême opposée en appui sur une coupelle métallique 18 solidaire de la membrane 12. Les deux coupelles 17 et 18 coaxiales à la membrane 12 enserrent la portion centrale de cette dernière par vissage d'un écrou 19 à l'extrémité de la tige 10 amenant la coupelle 17 en appui sur une butée fixe 20 solidaire de la tige 10. Le boîtier 11 comporte un embout 11a débouchant dans la chambre externe 14 et mettant en communication de fluide cette dernière, par l'intermédiaire d'une conduite et d'une vanne de coupure temporisée (non représentées), avec la tubulure d'admission 1 en un point situé en amont du papillon d'admission.

La tige 10 traverse coaxialement le doigt 8 jusqu'à venir en contact électrique avec l'élément chauffant 7. Un fil électriquement conducteur 21 est en contact électrique avec une borne d'alimentation 22 solidaire du boîtier 11 et avec la spire extrême du conducteur spiralé 15 en appui sur la paroi d'extrémité du boîtier 11. Un autre conducteur électrique (non représenté) relie l'élément chauffant 7 à un point fixe de contact électrique susceptible d'être relié à un autre point fixe de contact électrique au potentiel de masse par un élément de contact 23 fermé lorsque l'élément chauffant 7 se trouve dans le conduit d'admission 2. La borne 22 étant reliée au potentiel positif d'une source continue d'alimentation constituée par exemple par une batterie d'un véhicule automobile, on définit ainsi un trajet de courant du conducteur 21 à la masse en passant par le conducteur spiralé 15, la coupelle 17, la tige 10, l'élément chauffant 7 et l'élément de contact 23. L'élément chauffant 7 est constitué d'un matériau à résistance électrique à coefficient de température positive. En position escamotée de l'élément chauffant 7, l'extrémité libre de la tige 10 agit sur un bras pivotant 24 dans le sens des aiguilles d'une montre à l'encontre de la force de rappel d'un ressort 25 situé entre le bras 24 et la paroi d'extrémité du boîtier 11, lequel bras 24 commande le déplacement vers le haut d'un axe 26 ouvrant l'élément de contact 23 de façon à couper le circuit d'alimentation électrique de l'élément chauffant 7.

Le fonctionnement du dispositif ressort déjà de la description qui en a été faite ci-dessus et va être maintenant expliqué.

Lorsque le moteur est à l'arrêt, le doigt 8 est maintenu en position active de présence de l'élément chauffant 7 dans le conduit d'admission 2 par l'action du ressort 16 sur la membrane 12, sans que l'élément chauffant soit en fonctionnement ; celui-ci n'est alimenté qu'au démarrage du moteur, lors de l'établissement du contact électrique. Après une période prédéterminée correspondant à la mise en température du moteur, la vanne de coupure temporisée installée dans la conduite reliant la chambre externe 14 à la tubulure d'admission est activée et met ladite tubulure en communication avec la chambre 14 dont la pression décroît de façon concomitante. La membrane 12 est aspirée et comprime le ressort 16. Le doigt 8 se rétracte jusqu'à ce que l'élément chauffant 7 soit escamoté dans la partie correspondante de la culasse 3 avec l'extrémité 8b du doigt 8 en position assurant la continuité de la paroi inférieure du conduit d'admission 2. En position escamotée de l'élément chauffant 7, la tige 10 agit sur le bras 24 pour ouvrir l'élément de contact 23 et ainsi couper le circuit d'alimentation électrique de l'élément chauffant 7. Bien entendu, les ressorts 15 et 16 sont tarés de façon à permettre à l'élément 7 d'être maintenu en position active ou inactive suivant la pression d'air règnant dans la chambre 14.

Au lieu d'être actionné pneumatiquement comme décrit ci-dessus, le doigt 8 peut être actionné par un système mécanique ou électrique.

La partie de l'élément 7 exposée aux jets de carburant de l'injecteur 6 peut avoir une forme conçue pour offrir aux jets la plus grande surface de chauffe possible. Ainsi, la forme ronde mentionnée précédemment convient à cet effet mais on peut prévoir également une forme représentée en figure 4 où l'élément 7 à section transversale circulaire comporte une partie concave 7a faisant face aux jets de l'injecteur 6. La figure 5 représente schématiquement un conduit d'admission 2 se séparant en conduits 2a et 2b pour alimenter par l'intermédiaire de deux soupapes d'admission 5 un cylindre d'un moteur à plusieurs soupapes par cylindre. Dans ce cas, avantageusement, l'élément chauffant 7 peut avoir en section transversale une forme triangulaire à flancs sensiblement concaves avec la pointe de cette forme dirigée vers l'injecteur 6 et le plan bissecteur vertical de celle-ci contenant l'axe longitudinal de l'injecteur 6.

## Revendications

1. Dispositif d'admission pour un moteur à combustion interne à gaz prémélangé, du type comprenant un injecteur de carburant (6) disposé dans la tubulure d'admission (1) en aval du papillon d'admission et un élément chauffant (7) disposé en aval de l'injecteur (6) dans le conduit d'admission (2) se raccordant à la tubulure d'admission (1) pour réchauffer le mélange air-carburant avant son entrée dans le cylindre (4) du moteur, caractérisé en ce que l'élément chauffant (7) est escamotable dans la partie de culasse (3) définissant le conduit d'admission (2) lorsque la période de démarrage à froid du moteur est achevée.

2. Dispositif selon la revendication 1, caractérisé en ce que l'élément chauffant (7) précité est porté par un organe thermiquement isolant commandé (8) pouvant occuper une position active de présence de l'élément chauffant (7) dans le conduit d'admission (2) et une position inactive d'escamotage de l'élément chauffant (7) dans la partie de culasse (3) précitée.

3. Dispositif selon la revendication 2, caractérisé en ce que l'organe (8) précité est un doigt monté coulissant dans la partie de culasse (3) précitée et prolongé à son extrémité opposée à celle,portant l'élément chauffant (7) par une tige (10) logée dans un boîtier extérieur (11) fixé à la culasse (3) et solidaire d'une membrane souple (12) séparant le boîtier (11) en deux chambres interne (13) et externe (14), la chambre externe (14) communiquant avec la tubulure d'admission (1) en amont du papillon d'admission par l'intermédiaire d'une vanne de coupure temporisée de façon que la pression d'air règnant dans la chambre externe (14) après une période prédéterminée de démarrage du moteur exerce sur la membrane (12) une aspiration amenant le doigt (8) à la position inactive précitée.

4. Dispositif selon la revendication 3, caractérisé en ce qu'il comprend un ressort (16) disposé dans la chambre extrême (14) en étant en appui sur la membrane (12) et sur la face extrême opposée du boîtier (11) et taré de façon à permettre le maintien du doigt (8) à la position active ou inactive suivant la pression d'air règnant dans la chambre externe (14).

5. Dispositif selon la revendication 3, , caractérisé en ce qu'il comprend un contacteur électrique (23) actionné par l'extrémité libre de la tige (10) lorsque le doigt (8) est en position inactive de façon à couper le circuit d'alimentation électrique de l'élément chauffant (7).

6. Dispositif selon la revendication 3, caractérisé en ce que la tige (10) est en un matériau électriquement conducteur et traverse le doigt (8) pour contacter l'élément chauffant (7) qui est relié au potentiel positif d'une source d'alimentation par l'intermédiaire de la tige (10), d'un conducteur spiralé (15) situé dans la chambre interne (13) et d'un fil conducteur (21) relié électriquement au conducteur spiralé (15) et à une borne d'alimentation (22) solidaire du boîtier (11) et au potentiel de masse par le contacteur électrique (23).

7. Dispositif selon l'une des revendications précédentes, caractérisé en ce que l'élément chauffant (7) présente en section transversale une forme circulaire à partie concave (7a) tournée vers l'injecteur (6).

8. Dispositif selon l'une des revendications 1 à 6, où l'élément chauffant (7) est disposé à l'endroit où le conduit d'admission (2) se sépare en deux branches (2a, 2b) pour alimenter deux soupapes d'admission (5) du moteur à au moins trois soupapes par cylindre, caractérisé en ce que l'élément chauffant (7) présente en section transversale une forme triangulaire, dont le plan bissecteur vertical contient l'axe de l'injecteur (6) et la pointe fait face à l'injecteur (6).

## Patentansprüche

1. Einlassvorrichtung für einen Verbrennungsmotor mit vorgemischtem Gas, derjenigen Gattung mit einer in der Einlassleitung (1) stromabwärts der Einlassdrosselklappe angeordneten Brennstoffeinspritzdüse (6) und einem stromabwärts der Einspritzdüse (6) in dem sich an die Einlassleitung (1) anschliessenden Einlasskanal (2) angeordneten Heitzelement (7), um das Luft-Brennstoff-Gemisch vor seinem Eintritt in den Zylinder (4) des Motors zu erwärmen, dadurch gekennzeichnet, dass das Heitzelement (7) in den den Einlasskanal (2) abgrenzenden Zylinderkopfteil (3) einziehbar ist, wenn die Kaltstartsperiode des Motors beendet ist.

2. Vorrichtung nach Anspruch 1, dadurch gekennzeichnet, dass das vorgenannte Heitzelement (7) von einem wärmeisolierenden gesteuerten Glied (8) getragen wird, welches eine wirksame Gegenwartstellung des Heitzelementes (7) in dem Einlasskanal (2) und eine unwirksame in den vorgenannten Zylinderkopfteil (3) eingezogene Stellung des Heitzelementes (7) einnehmen kann.

3. Vorrichtung nach Anspruch 2, dadurch gekennzeichnet, dass das vorgenannte Glied (8) ein in dem vorgenannten Zylinderkopfteil (3) gleitbar angeordneter und an seinem dem das Heitzelement (7) tragenden Ende entgegengesetzten Ende durch einen Stift (10) verlängerter Finger ist, welcher Stift in einem an dem Zylinderkopf (3) befestigten und mit einer nachgiebigen Membran fest verbundenen äusseren Gehäuse (11) untergebracht ist, welche das Gehäuse (11) in zwei Innen-und Aussenkammern (13) und (14) trennt, wobei die äussere Kammer (14) mit der Einlassleitung (1) stromaufwärts der Einlassdrosselklappe über ein Sperrventil in Verbindung steht, welches derart verzögert wird, das der in der äusseren Kammer (14) herrschende Luftdruck nach einer vorbestimmten Startperiode des Motors ein den Finger (8) in die vorgenannte unwirksame Stellung bringendes Ansaugen auf die Membran (12) ausübt.

4. Vorrichtung nach Anspruch 3, dadurch gekennzeichnet, dass sie eine in der Endkammer (14) sich an der Membran (12) und an der entgegengesetzten Endfläche des Gehäuses (11) abstützende Feder (16) aufweist, die geeicht ist, um das Halten des Fingers (8) in der wirksamen oder unwirksamen Stellung gemäss dem in der äusseren Kammer (14) herrschenden Luftdruck zu gestatten.

5. Vorrichtung nach Anspruch 3, dadurch gekennzeichnet, dass sie ein elektrisches Schütz (23) aufweist, dass durch das freie Ende des Stiftes (10) betätigt wird, wenn der Finger (8) in unwirksamer Stellung ist, um den elektrischen Kreislauf zur Speisung des Heitzelementes (7) zu unterbrechen.

6. Vorrichtung nach Anspruch 3, dadurch gekennzeichnet, dass der Stift (10) aus einem elektrisch leitfähigen Werkstoff besteht und den Finger (8) durchsetzt, um das Heitzelement (7) zu berühren, welches mit dem positiven Potential einer Speisequelle über den Stift (10), über einen in der inneren Kammer (13) gelegenen spiralförmigen Leiter (15) und über ein leitfähiges Draht (21) verbunden ist, welches an den spiralförmigen Leiter (15) und an eine mit dem Gehäuse (11) fest verbundene Anschlussklemme (22) und an das Massepotential durch das elektrische Schütz (23) angeschlossen ist.

7. Vorrichtung nach einem der vorangehenden Ansprüche, dadurch gekennzeichnet, dass das Heitzelement (7) im Querschnitt eine kreisförmige Gestalt mit einem der Einspritzdüse (6) zugewandten konkaven Teil (7a) aufweist.

8. Vorrichtung nach einem der Ansprüche 1 bis 6, bei welcher das Heitzelement (7) an derjenigen Stelle angeordnet ist, wo der Einlasskanal (2) sich in zwei Zweigen (2a, 2b) teilt, um zwei Einlassventile (5) des Motors mit wenigstens drei Ventilen je Zylinder zu speisen, dadurch gekennzeichnet, dass das Heitzelement (7) im querschnitt eine dreieckige Gestalt aufweist, deren senkrechte winkelhalbierende Ebene die Achse der Einspritzdüse (6) enthält und deren Spitze der Einspritzdüse (6) zugewandt ist.

## Claims

1. Intake device for an internal combustion engine for a pre-mixed gas, of the type comprising a fuel injector (6) disposed within the intake pipe (1) downstream of the intake butterfly valve and a heating element (7) disposed downstream of the injector (6) within the intake duct (2) connected to the intake pipe (1) for reheating the air-fuel mixture before its entering the cylinder (4) of the engine, characterized in that the heating element (7) is retractable into the cylinder head portion (3) defining the intake duct (2) when the period of the cold starting of the engine is completed.

2. Device according to claim 1, characterized in that the aforesaid heating element (7) is carried by a thermally insulating controlled member (8) which may assume an active position of presence of the heating element (7) in the intake duct (2) and an inoperative position of retracting of the heating element (7) into the aforesaid cylinder head portion (3).

3. Device according to claim 2, characterized in that the aforesaid member (8) is a finger slidably mounted in the aforesaid cylinder head portion (3) and extended at its end opposite to that carrying the heating element (7) by a rod (10) accommodated in an external casing (11) fastened to the cylinder head (3) and made fast to a yielding membrane (12) separating the casing (11) into two internal and external chambers (13) and (14), the external chamber (14) communicating with the intake pipe (1) upstream of the intake throttle valve through the medium of a cut-out valve time-delayed so that the air pressure prevailing in the external chamber (14) after a predetermined starting period of the engine exerts upon the membrane (12) a suction bringing the finger (8) to the aforesaid inoperative position.

4. Device according to claim 3, characterized in that it comprises a spring (16) disposed in the end chamber (14) while bearing upon the membrane (12) and upon the opposite end face of the casing (11) and calibrated so as to permit the holding of the finger (8) in the active or inactive position according to the air pressure prevailing within the external chamber (14).

5. Device according to claim 3, characterized in that it comprises an electric contactor (23) actuated by the free end of the rod (10) when the finger (8) is in inoperative position so as to cut off the electric circuit feeding the heating element (7).

6. Device according to claim 3, characterized in that the rod (10) is made from an electrically conducting material and extends through the finger (8) to contact the heating element (7) which is connected to the positive potential of a supply source through the medium of the rod (10), of a spiral conductor (15) located in the internal chamber (13) and of a conducting wire (21) electrically connected to the spiral conductor (15) and to a feed terminal (22) made fast to the casing (11) and to the ground potential of the electric conductor (23).

7. Device according to one of the foregoing claims, characterized in that the heating element (7) exhibits in cross-section a circular shape with a concave portion (7a) turned towards the injector (6).

8. Device according to one of claims 1 to 6, wherein the heating element (7) is disposed at the place where the intake duct (2) separates itself into two legs (2a, 2b) for feeding two intake valves (5) of the engine having at least three valves per cylinder, characterized in that the heating element (7) exhibits in cross-section a triangular shape the bisecting vertical plane of which contains the axis of the injector (6) and the apex of which is facing the injector (6).
